# FASCICULE DE BREVET EUROPEEN

(11) **EP 3 058 385 B1**
(45) Date de publication et mention de la délivrance du brevet: **28.02.2018**
(21) Numéro de dépôt: 14786855.8
(22) Date de dépôt: 16.10.2014
(51) Int. Cl.: G01S 5/00, B63C 9/00, G01S 5/02, G08B 21/08, G01S 19/17

(54) **PROCÉDÉ ET DISPOSITIF POUR LA SURVEILLANCE D'UNE ZONE À RISQUE, NOTAMMENT UNE ZONE DE BAIGNADE**
VERFAHREN UND VORRICHTUNG ZUR ÜBERWACHUNG EINER RISIKOZONE, INSBESONDERE EINER BADEZONE
METHOD AND DEVICE FOR MONITORING A RISK ZONE, IN PARTICULAR A BATHING ZONE

(30) Priorité: 16.10.2013 FR 1360040
(43) Date de publication de la demande: 24.08.2016
(73) Titulaire: INEO Aquitaine, 33615 Pessac Cedex (FR)
(72) Inventeur: MOOSUN, Réza, 31300 Tououse (FR); RENAUDON, Laurent, 33600 Pessac (FR); POLLATO, Stéphane, 33127 Saint Jean d'Illac (FR)
(74) Mandataire: Ipside
(86) Numéro de dépôt international: PCT/EP2014/072279
(87) Numéro de publication internationale: WO 2015/055794

(56) Documents cités:
- EP-A1- 1 492 069
- EP-A1- 2 722 636
- FR-A1- 2 883 093
- JP-A- 2006 031 554
- US-A1- 2003 120 364
- US-A1- 2005 271 266
- US-A1- 2008 266 118
- US-A1- 2013 328 683

## Description

L'invention concerne un procédé et un dispositif pour la surveillance d'une zone à risque, notamment une zone de baignade. L'invention est plus particulièrement, mais non exclusivement, adaptée à la surveillance d'une zone à risque en milieu naturel, telle qu'une plage en mer, en lac ou en eau vive, tant pour la surveillance de la zone terrestre que de la zone de baignade, ou encore un domaine skiable, et d'une manière générale tout domaine surveillé pour la pratique d'une activité en plein air.

En prenant l'exemple de la surveillance d'une plage, selon l'art antérieur, cette zone est surveillée par des sauveteurs, lesquels ont pour mission de détecter et de secourir toute personne en difficulté tant sur terre que dans l'eau. Plus particulièrement, en saison estivale, une telle zone à surveiller représente une surface de plusieurs kilomètres carrés, occupée par plusieurs milliers de personnes. Le temps d'intervention pour assurer le sauvetage d'une personne en détresse dépend de la nature de cette détresse et n'atteint que 2 minutes dans le cas d'une noyade.

Ainsi, durant ce temps très court, le sauveteur doit être en mesure de détecter la détresse, soit lui-même, soit en étant prévenu par un tiers, de localiser de manière précise ladite personne, de se déplacer jusqu'à elle afin de l'écarter du danger et de lui prodiguer les soins appropriés, lesquels soins sont susceptibles de nécessiter la présence de moyens médicaux non disponibles sur site, et qui par conséquent, doivent également être prévenus et convoqués dans le même délai.

D'autres cas, ne nécessitant pas la même urgence, demeurent néanmoins complexes à résoudre. Par exemple, un enfant égaré, qui quittant la zone de la plage, atteint une route où il est en danger du fait de la circulation automobile.

À titre d'exemple, et pour mieux situer le contexte de l'invention, les jours de forte affluence, une plage fréquentée sur le littoral atlantique français, compte près de 100 000 personnes concentrées sur une bande d'environ 500 mètres de large, dont 300 mètres de mer, et une longueur d'environ 5 km. Un tel espace est surveillé par une quinzaine d'agents qui, pour certains d'entre eux, assurent également des missions de police. Les frontières du domaine surveillé sont mouvantes, par exemple du fait des marées, et le domaine surveillé n'est pas physiquement délimité par des barrières ou des murs. Ainsi, une personne en détresse est susceptible de dériver, emportée par le courant, sur des distances importantes.

Les systèmes de l'art antérieur sont dédiés soit à la surveillance d'un espace clos, aux frontières immuables, comme une piscine, soit au secours des personnes en mer ou en montagne et visent à retrouver une personne isolée dans un grand espace. Ces derniers dispositifs de l'art antérieur ne permettent pas de réaliser une surveillance mais sont dédiés à la recherche de personnes en détresse, personnes qui disposent généralement d'un équipement leur permettant de survivre dans le milieu plusieurs heures voir plusieurs jours.

Ainsi, le dispositif et le procédé objets de l'invention visent à assister les sauveteurs dans l'ensemble de leurs missions de surveillance d'un très grand nombre de personnes, concentrées dans un espace soumis à des fluctuations topographiques d'origines climatique, bathymétrique, hydrologique ou nivologique sans que cette liste ne soit exhaustive. Les missions du sauveteur sont de :
- détecter une personne en détresse ;
- se déplacer à son secours dans un temps bref ;
- évaluer la condition physique de la personne ;
- déclencher les secours adéquats en fonction de cette évaluation.

Le document FR 2 969 356 décrit un dispositif d'assistance à la surveillance, essentiellement destiné à la surveillance des biens et des personnes dans un espace restreint. Ainsi, chaque objet ou personne à surveiller est équipé d'un dispositif comportant une étiquette à radiofréquence, laquelle étiquette porte un code d'identification spécifique. Ladite étiquette est lue lorsqu'elle se trouve à une distance maximale déterminée d'une antenne. Ainsi, en cas d'éloignement trop important d'une étiquette de l'antenne, celle-ci n'est plus détectée et une alarme est déclenchée. La détection des étiquettes est réalisée, selon cet art antérieur, dans un rayon de quelques dizaines de mètres autour de chaque antenne. Un tel dispositif n'est pas utilisable sur une plage soumise aux marées compte tenu du nombre d'antennes à installer et à retirer chaque jour. De plus, si ce dispositif de l'art antérieur est efficace pour détecter, par exemple, la chute d'une personne à la mer depuis un bateau, il ne permet pas de localiser cette personne.

Le document FR 2 888 183 décrit un dispositif apte à détecter et à localiser rapidement une personne à la mer. Ce dispositif nécessite la présence d'une antenne immergée, par exemple sur un bateau de secours, qui, à partir des signaux émis par un émetteur porté par la personne en détresse, localise ladite personne. Ce dispositif de l'art antérieur est efficace pour les recherches de personnes en détresse, à l'image des balises utilisées par les skieurs hors-piste et destinées à faciliter leur recherche en cas d'ensevelissement par une avalanche, mais ne permet pas de détecter le déclenchement de cette détresse.

Le document EP 1 950 720 décrit un dispositif pour la détection d'une noyade, adapté à un espace d'eau calme tel une piscine. Ledit dispositif comprend un émetteur placé sur la tête d'un nageur, soit dans les lunettes soit dans un serre-tête, et qui détecte le temps écoulé lorsque le nageur a la tête sous l'eau. Ledit dispositif comprend plusieurs détecteurs qui déterminent la position de la personne supposée en détresse par un principe de triangulation. Un tel dispositif n'est pas adapté à un environnement ouvert, tel une plage, ou la surface à contrôler est très importante, et où l'environnement de baignade est agité, de nombreuses personnes étant notamment susceptibles de perdre leur serre-tête ou leurs lunettes ou encore que ces dispositifs leur tombent autour du cou, générant ainsi de nombreuses fausses alertes.

Le document EP 1 492 069 décrit un système adapté à surveillance d'une piscine. Ce dispositif permet de détecter une situation de détresse potentielle, l'intervention relative à cette détresse étant évidente suite à sa détection car l'environnement est clos et non soumis à des fluctuations topographiques.

Le document FR 2 883 093 décrit un système adapté à la détection d'une détresse et à la recherche d'un utilisateur isolé dans un vaste domaine.

Le document US 2003 120364 décrit un système pour la recherche et la localisation d'une personne ou d'un objet. Un tel dispositif ne permet pas de réaliser la surveillance d'un domaine.

Le document US 2008 266118 décrit un système pour la surveillance des paramètres physiologiques d'un utilisateur, apte à générer une alarme transmise par radio lorsque ces paramètres s'écartent des valeurs nominales. Ce système de l'art antérieur permet de détecter une détresse et de localiser la personne en détresse mais n'offre pas d'assistance au sauveteur pour rejoindre la personne en détresse et pour déclencher les secours appropriés.

Le document JP 2006 031554 décrit un système pour la surveillance d'un espace en plein air comportant un réseau informatique de surveillance et un dispositif portatif comprenant une puce de positionnement par satellite.

L'invention vise à résoudre les inconvénients de l'art antérieur et concerne à cette fin un procédé pour la surveillance d'un espace en plein air, dit espace surveillé, mettant en oeuvre un système comportant :
a. un réseau informatique de surveillance comportant des moyens d'émission-réception dans une bande de fréquences comprise 135 MHz et 175 MHz (135 10⁶ à 175 10⁶ Hertz) selon un mode bidirectionnel non simultané et dont la couverture géographique est égale ou supérieure à celle l'espace surveillé ;
b. un dispositif portatif comprenant une puce GPS et des moyens pour émettre et recevoir des informations sur le réseau informatique de surveillance ;
c. des moyens (140) informatiques, connectés au réseau informatique de surveillance et comprenant dans des moyens de mémoire une cartographie géoréférencée de l'espace surveillé et un géorepérage virtuel d'une aire de surveillance dont la surface géographique est comprise dans la portée géographique des moyens d'émission-réception du réseau informatique de surveillance et des moyens d'affichage permettant de visualiser l'espace surveillé ;
lequel procédé comprend les étapes consistant à :
i. délimiter par géorepérage virtuel une aire de surveillance sur la cartographie géoréférencée ;
ii. émettre par le dispositif portatif sur le réseau de surveillance, à intervalles réguliers, une trame d'informations comprenant, un identifiant individuel dudit dispositif portatif, la position géolocalisée de ce dispositif portatif et l'état de détresse dudit dispositif portatif ;
iii. enregistrer dans les moyens de mémoire du système informatique la position géolocalisée dudit dispositif et l'horodatage de cette position.
iv. afficher sur les moyens d'affichage des moyens informatiques la position du dispositif portatif dans la cartographie lorsque l'état de détresse transmis par le dispositif portatif correspond à une situation de danger.

Ainsi, le système mettant en oeuvre le procédé objet de l'invention permet, notamment du fait d'un choix judicieux de la bande de fréquence pour l'établissement du réseau de surveillance, de surveiller une zone de quelques kilomètres carrés, s'étendant également sous la surface liquide, et d'échanger des données avec un très grand nombre d'appareils portatifs dans ladite zone, lesdits appareils étant au repos (non émetteurs) lorsqu'ils n'adressent pas leurs données sur ledit réseau de surveillance. Ces caractéristiques sont obtenues avec une dimension d'antenne et une puissance d'émission compatibles avec une dimension raisonnable dudit dispositif portatif. Le géorepérage virtuel de l'aire de surveillance permet d'adapter cette aire aux circonstances géographiques et climatiques particulières pour assurer une surveillance efficace de l'espace surveillé, et, cette aire de surveillance étant entièrement comprise dans la portée des moyens émetteurs-récepteurs du réseau de surveillance, de prévenir le porteur d'un dispositif portatif lorsque celui-ci sort de cette aire de surveillance. Les moyens d'affichage permettent de rapidement localiser une situation de détresse sur l'espace surveillé. Mis en oeuvre par le procédé objet de l'invention, ledit système reçoit en permanence des informations sur les dispositifs portatifs présents dans l'aire de surveillance indépendamment de leur visibilité par les sauveteurs. La transmission intermittente des informations permet d'économiser l'énergie consommée par lesdits moyens portatifs et de surveiller un très grand nombre de ces moyens.

Dans tout le texte :
- GPS est l'acronyme de « *Global Positioning System* » et correspond, dans le contexte de l'invention, à un système de positionnement par satellites quel qu'il soit ;
- GSM est l'acronyme de « *Global System for Mobile Communications* » et correspond, dans le contexte de l'invention à tout réseau de téléphonie commuté pour la transmission de la voix ou de paquets de données.

L'invention est avantageusement mise en oeuvre selon les modes de réalisation exposés ci-après lesquels sont à considérer individuellement ou selon toute combinaison techniquement opérante.

Avantageusement, le système comporte :
d. une caméra liée à un support orientable, pilotés par les moyens informatiques, apte à scruter la surface de l'espace surveillé et à envoyer les images obtenues vers lesdits moyens informatiques

Ainsi, ladite caméra permet de scruter l'espace surveillé pour obtenir rapidement une information visuelle, soit sur le porteur d'un dispositif portatif, notamment lorsque ledit porteur est en détresse, soit sur les conditions de cet espace, comme les conditions climatiques, hydrologiques ou nivologiques de cet espace. Les images ainsi obtenues sont acheminées vers les moyens informatiques et font avantageusement l'objet d'un traitement d'image pour en extraire des paramètres spécifiques.

À cette fin le système comprend avantageusement :
e. un réseau informatique sans fil, dit réseau de communication, connecté aux moyens informatiques ;
f. un terminal numérique mobile, dit tablette, comprenant un écran vidéo et connecté au réseau de communication, apte à recevoir par ledit réseau de communication une image émise par les moyens informatiques.

Ainsi, ledit terminal numérique mobile permet à un sauveteur d'obtenir des informations en réalité augmentée sur l'espace surveillé.

Avantageusement, le dispositif portatif comporte des moyens pour émettre sur le réseau de surveillance une information relative à une situation de détresse. Ainsi, la réception de cette information permet de déclencher un protocole adapté pour traiter une telle alerte.

Selon un premier mode de réalisation le dispositif portatif est porté par un usager de l'espace surveillé et comporte :
bi. un capteur apte à mesurer un paramètre physiologique de l'usager ;
bii. des moyens pour comparer, avec un seuil déterminé, le niveau dudit paramètre physiologique ;
biii. des moyens pour émettre un signal su le réseau de surveillance lorsque ledit seuil déterminé est franchi.

Ce mode de réalisation permet de déclencher automatiquement une alerte lorsque l'usager porteur du dispositif portatif est en situation de danger, même si l'usager n'est pas en mesure de déclencher lui-même un signal de détresse.

Selon un autre mode de réalisation, compatible avec le mode de réalisation précédent, le dispositif portatif est porté par un sauveteur surveillant l'espace surveillé et comporte :
biv. des moyens pour émettre une information relative à la gravité de la situation de détresse ;
bv. des moyens pour informer le porteur du dispositif de la bonne transmission des signaux sur le réseau de surveillance.

Ainsi, le sauveteur se portant au secours d'un usager en détresse est en mesure de transmettre instantanément à son poste de commandement des informations sur l'état physique de l'usager secouru, avec la certitude que ces informations sont bien reçues. Ainsi, le sauveteur se consacre plus rapidement à la sécurisation de la personne en détresse et les moyens supplémentaires d'assistance sont prévenus plus tôt.

Avantageusement, le dispositif portatif comporte :
bvi. des moyens pour informer son porteur lorsqu'il sort de l'aire de surveillance.

Ainsi, les sauveteurs surveillant l'espace surveillé se concentrent sur la surveillance de cet espace, les usagers s'écartant de la zone de surveillance étant automatiquement prévenus de leur mise en danger par leur sortie de l'espace surveillé. Avantageusement, le système comporte :
g. un vecteur, comportant des moyens de géolocalisation, apte à se déplacer dans l'espace surveillé et comportant des moyens pour transporter un équipement de secours.

Ainsi, ledit vecteur est apte à se déplacer rapidement sur un lieu où une détresse est détectée.

Avantageusement, le vecteur comporte une caméra vidéo apte à communiquer avec les moyens informatiques. Ainsi ledit vecteur permet d'observer l'usager en détresse selon des angles différents, notamment en présence d'obstacles à la visibilité tels que des cerfs-volants, des embarcations, des structures gonflables ou des parasols.

Avantageusement, le procédé objet de l'invention comporte une étape consistant à :
v. éterminer selon une fréquence d'évaluation, le nombre de dispositifs portatifs se trouvant dans l'aire de surveillance.

Ainsi, en cas d'événement particulier se produisant dans l'aire de surveillance, par exemple dans le cas d'une avalanche ou dans le cas d'un courant de sortie de baïne, les sauveteurs sont immédiatement renseignés sur le nombre d'usagers potentiellement concernés par le phénomène, pour mettre en oeuvre rapidement les moyens de secours adaptés.

Avantageusement, le procédé objet de l'invention comporte les étapes consistant à :
vi. enregistrer dans un fichier historique la géolocalisation des situations de détresse détectées ;
vii. délimiter par géorepérage virtuel, dans l'aire de surveillance, une aire, dite zone à risque, en fonction des enregistrements contenus dans le fichier historique.

Ainsi, le procédé objet de l'invention permet d'améliorer, par apprentissage, la surveillance de l'espace, et de faire bénéficier les sauveteurs d'une expérience acquise sur plusieurs années.

Selon un mode de réalisation particulier, le procédé objet de l'invention comprend les étapes consistant à :
viii. acquérir des informations sur la topographie de l'espace surveillé et les forces d'entraînement d'un usager présent dans cet espace ;
ix. déduire des informations acquises à l'étape viii) et des informations obtenues à l'étape iii) une zone de localisation probable du dispositif portatif dans l'espace surveillé ;
x. afficher la zone déterminée à l'étape ix).

Ainsi, le procédé objet de l'invention permet, par simulation, de suppléer une absence de signal de géolocalisation du dispositif portatif, pour orienter les secours vers la position la plus probable de l'usager en détresse.

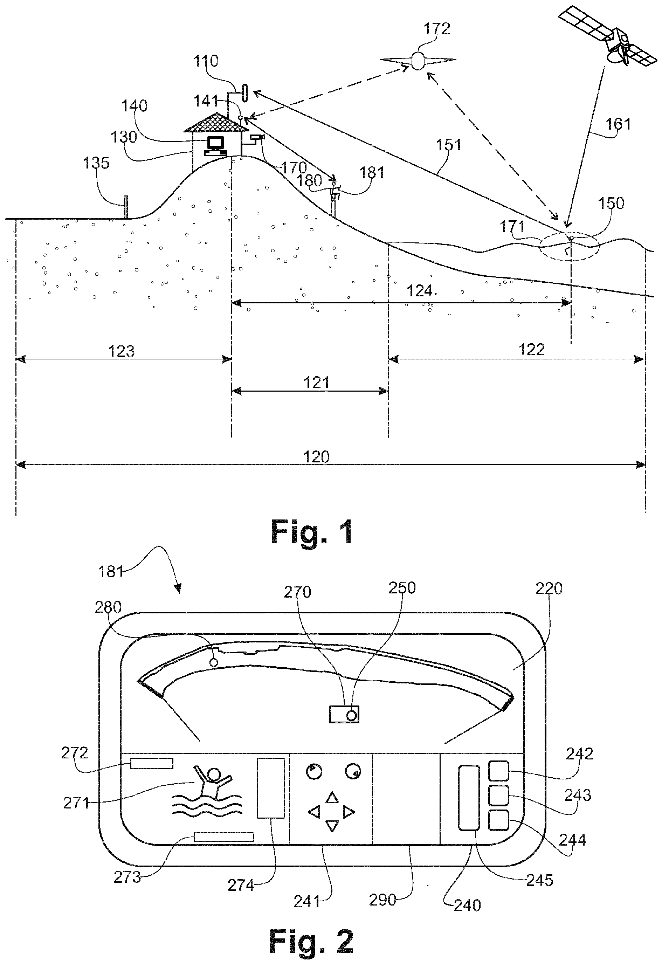

Le procédé et le dispositif objets de l'invention sont avantageusement utilisés pour la surveillance d'une zone de baignade ou pour la surveillance d'un domaine skiable. L'invention est exposée ci-après selon ses modes de réalisation préférés, nullement limitatifs, et en référence aux figures 1 à 6 dans lesquelles :
- la figure 1 montre selon une vue en coupe transversale, un exemple d'installation du système objet de l'invention sur une plage ;
- la figure 2 est une vue de face schématique d'un exemple de réalisation du terminal mobile du système objet de l'invention ;

- la figure 3 montre deux exemples de réalisation du dispositif portatif du systèmeif objet de l'invention, figure 3A selon une vue de face un mode de réalisation au format carte de crédit ou carte d'identité, figure 3B, selon une vue en perspective, un mode de réalisation de type montre-bracelet ;
- la figure 4 représente, en vue de dessus un exemple de réalisation d'un dispositif portatif du système objet de l'invention, destiné à être porté par un sauveteur ;
- la figure 5 illustre selon une vue schématique de dessus, un exemple d'éléments cartographiques utilisés par le système objet de l'invention ;
- et la figure 6 est un logigramme d'un exemple de réalisation du procédé objet de l'invention.

Figure 1, selon un exemple de mise en oeuvre du système objet de l'invention, celui-ci comporte un émetteur-récepteur dans une plage de fréquence comprise en 135 MHz et 175 MHz, lequel émetteur récepteur comporte une antenne (110) dipolaire fixée sur un point haut, par exemple le Poste (130) de Commandement Sécurité du domaine à surveiller, par exemple une zone de baignade comportant une plage. Selon cet exemple de réalisation, la zone surveillée comprend, selon une coupe transversale, la zone dite de plage (121) dont la largeur est variable en fonction de la marée, la zone de baignade (122) s'étendant sur une largeur d'au moins 300 mètres depuis la plage, et une zone (123) à l'arrière de la plage correspondant, selon la configuration du terrain, à une zone boisée, une zone de circulation automobile telle qu'un remblai, ou encore un parking. La largeur (120) totale de la zone à surveiller est de l'ordre de 800 mètres. Le diagramme d'émission de l'antenne dipolaire a la forme d'un tore de section circulaire et de rayon interne nul, posé sur le plan horizontal. Aussi, l'antenne (110) dipolaire est avantageusement placée de sorte que le lobe principal du diagramme d'émission de ladite antenne dans les plans horizontaux et verticaux est dégagé de tout obstacle. Dans le cas où le terrain ne permet pas de réaliser cette condition, plusieurs antennes de ce type sont installées de sorte à couvrir la surface visée.

L'émetteur-récepteur émet et reçoit par l'intermédiaire de l'antenne (110) dans une plage de fréquence comprise entre 135 MHz et 175 MHz (135,106 Hz à 175,106 Hz). Cette basse fréquence permet de pénétrer le milieu, tel qu'une zone (122) de baignade, sur une profondeur de quelques dizaines de centimètres avec une puissance d'émission réduite comprise entre 5 watts et 10 Watts. À titre d'exemple non limitatif, l'émetteur-récepteur fonctionne selon un couple de fréquence de 171,4 MHz en transmission et 166 MHz en réception. Ce couple de fréquence permet d'échanger un signal entre l'antenne (110) et un émetteur ou un récepteur de 5 watts jusqu'à une profondeur de 20 cm sous l'eau à une distance transversale (124) atteignant jusqu'à 300 mètres depuis l'antenne (110). Un couple de fréquences spécifique est alloué à chaque espace surveillé dans une même zone géographique de sorte à éviter les interférences.

Le dispositif portatif (non représenté) comporte des moyens radios pour émettre un signal (151) apte à être capté par l'antenne (110) du dispositif émetteur-récepteur du poste de commandement.

Ces moyens d'émission et de réception permettent de créer un réseau, dit réseau de surveillance, auquel sont connectés des moyens informatiques (140) du poste de commandement, et dans lequel chaque dispositif portatif comporte un identifiant unique. Ledit dispositif portatif communique sur le réseau en émettant à intervalles réguliers, par exemple toutes les minutes, des trames d'informations. Le dispositif portatif comporte une puce GPS lui permettant de recevoir du système GPS sa position et par suite de la transmettre sur le réseau.

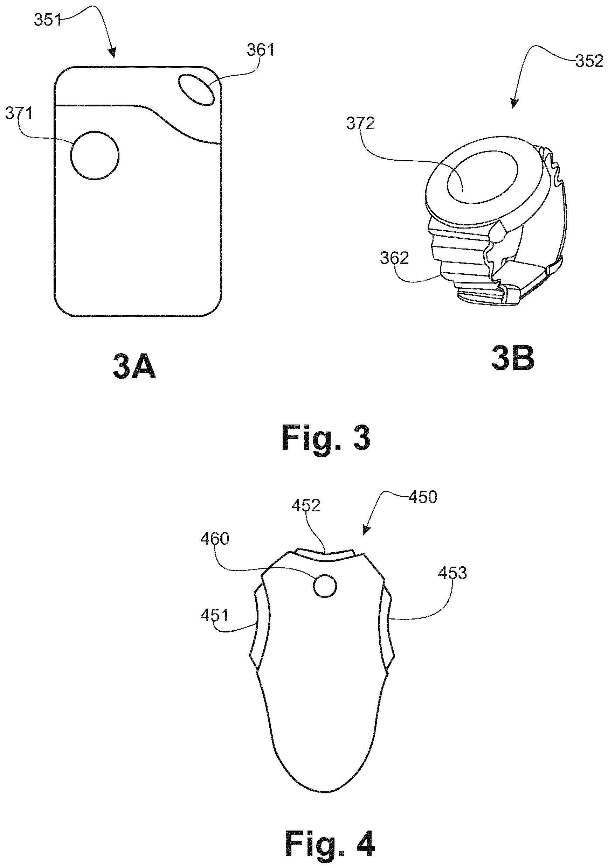

Figure 3A, selon un exemple de réalisation le dispositif portatif (351) prend la forme d'un badge au format carte de crédit ou carte d'identité. Ledit badge est de dimension suffisante pour y insérer une ou plusieurs piles lithium de type pile bouton, pour disposer d'une puissance d'émission pouvant aller jusque 25 watts. Ledit badge (351) comprend des moyens (361) pour l'attacher aux vêtements de l'usager, et un bouton (371) poussoir apte à déclencher la transmission d'un signal de détresse.

Figure 3B, selon un autre exemple de réalisation, le dispositif portatif se présente sous la forme d'un boîtier (352) porté au poignet de l'usager. Selon cet exemple de réalisation le dispositif portatif comprend un bracelet (362), et le boîtier comporte un bouton (372) poussoir pour déclencher l'émission du signal de détresse. Selon en mode de réalisation particulier, ledit boîtier comporte sur sa face dite interne, en contact avec la peau de l'usager, un capteur apte à mesurer des fonctions physiologiques de cet usager. Ce type de capteur est par exemple décrit dans le document WO 2010 057495 ou dans le document US 2008 266118.

Selon ces deux exemples de réalisation du dispositif (351, 352) portatif porté par l'usager, lesdits dispositifs comportent une étiquette d'identification par radiofréquence, ou puce RFID.

Figure 4, selon un autre exemple de réalisation, compatible avec les exemples précédent, le système objet de l'invention comporte un dispositif portatif (450) porté par un sauveteur. Toute comme le dispositif portatif porté par l'usager, ce dispositif portatif est connecté au réseau de surveillance, et, selon le mode de réalisation, émet des trames d'informations sur ce réseau à intervalle régulier, par exemple pour permettre au poste de commandement de connaître la position du sauveteur dans l'espace surveillé, et des trames d'informations transmises spécifiquement en situation de sauvetage. Ainsi, selon cet exemple de réalisation, le dispositif portatif (450) du sauveteur comporte 3 boutons (451, 452, 453) dont la combinaison des pressions permet de transmettre sur le réseau une information relative à l'état de conscience de la victime secourue. À titre d'exemple non limitatif, la pression sur le bouton de gauche (451) entraîne la transmission sur le réseau de surveillance d'une information indiquant que la victime secourue est consciente, la pression sur les deux boutons (451, 453) du côté correspond à la transmission sur le réseau de surveillance d'une information indiquant que la victime est inconsciente et la pression simultanée sur les 3 boutons (451, 452, 453) entraîne la transmission sur le réseau de surveillance d'une information indiquant que la victime est en arrêt cardiorespiratoire. Dans le cas l'utilisation du système objet de l'invention sur un domaine skiable, les 3 degrés sont par exemple : blessé mais conscient, inconscient, inconscient sans réaction pupillaire. Selon un exemple de réalisation, les dispositifs portatifs (351, 352, 450) communiquent sur le réseau de surveillance selon un mode multiplexé à accès multiple à répartition dans le temps (ou TDMA) et échangent avec l'émetteur-récepteur correspondant à ce réseau, lors de chaque séquence d'émission-réception, une trame comprenant toutes ou partie des informations suivantes :
- le code d'identification du dispositif portatif ;
- les coordonnées GPS dudit dispositif ;
- le niveau d'énergie des piles du dispositif portatif ;
- la valeur du bouton-poussoir de déclenchement de détresse (activé ou non) ;
- un paramètre relatif à l'état général du dispositif portatif : en fonctionnement nominal ou défectueux ;
- un ou plusieurs paramètres physiologiques de l'usager, captés par le dispositif portatif ;
- la profondeur du dispositif portatif lorsque celui-ci est pourvu de moyens permettant de mesurer ce paramètre ;
- le niveau de conscience de l'usager secouru, dans le cas du dispositif portatif du sauveteur ;
- une clef de codage permettant de décrypter la séquence d'information transmise.

Ainsi, lorsque plusieurs informations sont dites « transmises en même temps », cela signifie qu'elles sont transmises au cours de la même séquence d'échange.

Dans le cas d'un dispositif portatif (351, 352) dédié à un usager de l'espace surveillé, la même trame d'information est émise plusieurs fois de suite lors de chaque séquence d'échange, par exemple 10 fois, de sorte à maximiser la probabilité de réception de cette trame. Dans le cas d'un dispositif portatif (450) destiné à un sauveteur, au cours d'une séquence d'échange, la même trame d'informations est répétée autant de fois que nécessaire, jusqu'à ce que le dispositif portatif reçoive un signal d'acquittement attestant de la réception de l'information sur le réseau. Selon un exemple de réalisation, le dispositif portatif (450) dédié au sauveteur comporte une diode électroluminescente (460) qui s'allume pour indiquer la réception du signal d'acquittement et renseigne ainsi le sauveteur sur la réception effective des informations transmises.

La fréquence d'émission des trames par le dispositif portatif est déterminée par la nature de l'activité pratiquée dans l'espace surveillé. Les informations reçues de chaque dispositif portatif présent dans l'espace surveillé sont enregistrées dans des moyens de mémoire des moyens informatiques, et effacées régulièrement, par exemple selon une méthode FIFO, de sorte à conserver en permanence en mémoire suffisamment d'enregistrements pour reconstituer la trajectoire du dispositif portatif dans l'espace surveillé.

En revenant à la figure 1, les informations transmises par les dispositifs portatifs sont traitées par les moyens (140) informatiques comportant une cartographie géoréférencée de l'espace surveillé. Selon un exemple de réalisation, lesdits moyens (140) informatiques pilotent une caméra (170) placée sur un support mobile pour observer une zone (171), dite zone d'intérêt, autour de la dernière localisation GPS connue ou extrapolée d'un dispositif portatif dont le signal de détresse est enclenché. Alternativement, ou de manière complémentaire, l'observation vidéo de la zone (171) d'intérêt est réalisée au moyen d'un vecteur, tel un drone (172), portant une caméra et connecté aux moyens (140) informatiques par une connexion réseau sans fil, par exemple selon un protocole dit WIFI® selon la norme ISO/CEI 8802-11. À cette fin, selon cet exemple de réalisation, le dispositif objet de l'invention comporte un deuxième émetteur-récepteur (141) utilisant une autre bande de fréquence, par exemple selon le protocole WIFI®, connecté aux moyens informatiques, et apte à créer un réseau sans fil, dit réseau de communication. Ce réseau de communication sans fil permet également de communiquer avec un sauveteur (180) ou un surveillant superviseur, équipé d'un terminal (181) mobile, par exemple, sous la forme d'un écran tactile ou tablette. Muni de ce terminal (181), le sauveteur (180) reçoit une image de la zone (171) d'intérêt, ce qui lui permet de réaliser une première évaluation rapide de la situation de l'usager en détresse.

Selon un mode de réalisation avantageux du système objet de l'invention, le sauveteur (180) est en mesure de piloter l'orientation de la caméra (170), ou le drone (172), par l'intermédiaire du réseau de communication, de sorte à mieux visualiser la zone (171) d'intérêt. Avantageusement, le drone (172) est équipé d'un émetteur-récepteur radio lui permettant de se connecter au réseau de surveillance, et apte à interagir avec l'étiquette à radiofréquence du dispositif portatif de l'usager (150) de sorte à faciliter la localisation précise de l'usager en détresse.

Selon un mode de réalisation particulièrement avantageusement, le vecteur comporte des moyens de proxi-localisation, par exemple sous la forme d'un sonar. Ce mode de réalisation est particulièrement avantageux lorsqu'il est installé sur une planche de secours, laquelle est couramment utilisée par les sauveteurs sur les plages. Ainsi, le sauveteur utilise ces moyens de proxi-localisation pour localiser l'usager en détresse plus rapidement, notamment lorsque l'usager n'est plus visible ou difficilement visible en surface.

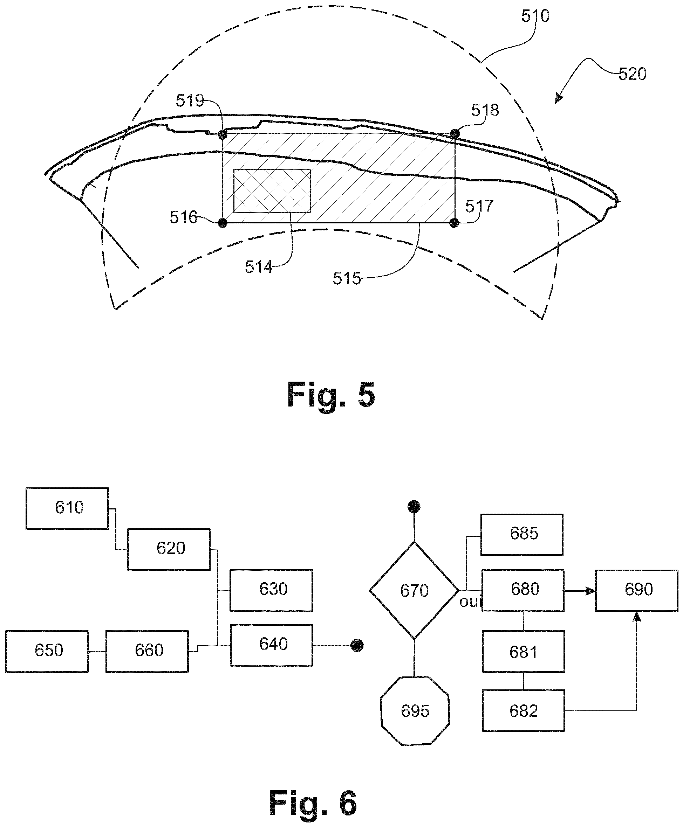

Figure 5, selon un exemple de réalisation la cartographie (520) enregistrée dans les moyens de mémoire des moyens informatiques comprend une représentation topographique de l'espace surveillé. Ledit espace surveillé est compris dans la portée (510) géographique des moyens constituant le réseau de surveillance. Dans cette couverture, une aire (515) de surveillance est définie par un géorepérage délimité par des points (516, 517, 518, 519) définis par leurs coordonnées GPS. Cette aire (515) de surveillance est nécessairement entièrement comprise dans la zone de couverture (510) des moyens radios réalisant le réseau de surveillance. La définition de cette aire permet notamment aux sauveteurs de délimiter une zone de surveillance appropriée en fonction de leur effectif et des circonstances. Les moyens informatiques comportent en outre des informations relatives aux forces d'entraînement des usagers dans l'aire (515) de surveillance. Ainsi, selon un exemple de réalisation, la caméra du système objet de l'invention est avantageusement utilisée pour scruter la surface de la mer et en mesurer la hauteur et la fréquence de houle. Ces informations combinées à des informations bathymétriques et climatiques du lieu surveillé, obtenues, soit sur place, soit au moyen d'internet, sont introduites dans un modèle préétabli pour en déduire la vitesse et la direction des courants dans ladite aire de surveillance. Selon un exemple d'utilisation du système objet de l'invention sur un domaine skiable, des informations concernant par exemple les pentes, la qualité de neige et les trajets connus d'avalanche sont utilisées à cette fin. Ainsi, en cas de détection d'un signal de détresse d'un usager, suivie d'une perte du signal du dispositif portatif, le système objet de l'invention est capable de fournir une localisation probable de l'usager portant ledit dispositif, en estimant la dérive de celui-ci, et ainsi d'accélérer la rencontre des sauveteurs avec la personne en détresse.

Les moyens informatiques du système objet de l'invention conservent en mémoire la localisation de tous les déclenchements du signal de détresse dans un fichier historique, de sorte que ces enregistrements permettent d'établir des statistiques et de délimiter, dans l'aire surveillée (515), par géorepérage, une zone (514) à risque dans l'espace surveillé. Ainsi, lorsque la trame d'information transmise par le dispositif portatif indique que la localisation de celui-ci est proche de la zone à risque (514), une commande est émise sur le réseau de surveillance à destination dudit dispositif portatif afin de déclencher un signal à destination de l'usager l'avertissant du danger. Ledit signal est par exemple un signal sonore, un signal visuel, ou encore un vibreur. À titre d'exemple non limitatif, cette méthode permet de prévenir un skieur qu'il s'apprête à aborder une piste destinée à des skieurs chevronnés. De la même manière, un signal est émis par le dispositif portatif lorsque l'usager qui le porte sort de l'aire surveillée (515).

Figure 2, selon un exemple de réalisation, le terminal (181) mobile du sauveteur est un écran tactile durci et étanche, comportant une liaison sur le réseau de communication avec les moyens informatiques du dispositif objet de l'invention et avantageusement une capacité de communication par les réseaux téléphoniques GSM. L'affichage sur cet écran (181) tactile comporte une fenêtre de visualisation cartographique de l'espace surveillé, montrant la localisation (280) du sauveteur et la localisation (250) de l'usager ayant émis un signal de détresse. Une fenêtre (271) de l'écran tactile permet de voir une image vidéo de la zone d'intérêt, et un pavé (241) de commande virtuel permet de commander la caméra vidéo et son support orientable, ou le drone, de sorte à modifier l'angle de vue ou la zone visualisée. Selon cet exemple de réalisation, la fenêtre (271) de visualisation de la zone d'intérêt comprend un affichage (272) du code d'identification du dispositif portatif porté par l'usager, un affichage (273) des coordonnées de la zone (270) vue par la caméra, cette zone (270) étant, selon cet exemple de réalisation, également indiquée sur la fenêtre (220) d'affichage de la cartographie. Avantageusement, la fenêtre (271) de visualisation de la zone d'intérêt comporte un affichage (274) permettant au sauveteur d'estimer le degré d'urgence de l'alerte. Ainsi, selon un exemple non limitatif, cet affichage (274) comporte une indication du temps écoulé depuis le premier signal de détresse reçu de l'usager, ainsi qu'un ou plusieurs paramètres physiologiques mesurés par le dispositif portatif de l'usager. À titre d'exemple, un tel dispositif portatif, porté au poignet et équipé d'un capteur approprié, permettant d'estimer le pouls de l'usager et sa pression artérielle.

Ainsi, en revenant à la figure 1, la mesure des paramètres physiologiques de l'usager (150) et leur transmission sur le réseau de surveillance, sont déclenchées par le déclenchement du signal de détresse. Lesdits paramètres sont adressés par intervalles de temps réguliers et traités par les moyens informatiques (140) qui en déduisent des indicateurs tant à partir de leur valeur instantanée que leur évolution, et diffusent ces indicateurs par le réseau de communication, vers le terminal (181) du sauveteur (180).

Selon un autre mode de réalisation, le moyen portatif comporte des moyens de mémoire dans lesquels un seuil limite du paramètre physiologique mesuré est enregistré. Ainsi, lorsque l'évaluation dudit paramètre physiologique dépasse un tel seuil, le dispositif portatif déclenche lui-même l'alerte sans action spécifique de l'usager. Selon le mode de réalisation, un seuil unique est préenregistré dans lesdits moyens de mémoire du dispositif portatif. Alternativement, le seuil est enregistré dans lesdits moyens de mémoire dudit dispositif portatif lorsque celui-ci est confié à l'usager, notamment en fonction de l'âge et de l'état de santé de l'usager.

Figure 2, selon un exemple de réalisation, le terminal (181) mobile, ou les moyens informatiques (140), comportent une fenêtre (240) d'affichage comportant des boutons (242, 243, 244) virtuels correspondants à des séries d'actions spécifiques déclenchées en pressant un seul de ces boutons. Ainsi, à titre d'exemple non limitatif, un des boutons (242) virtuels correspond à l'acquittement de l'alerte par exemple lorsque le sauveteur considère qu'il n'y a pas d'urgence compte tenu de ses observations, notamment lors d'un déclenchement involontaire. Un autre bouton (243) correspond au déclenchement des secours. Avantageusement, lors de l'action sur le bouton (243) de déclenchement des secours, le terminal (181) mobile du sauveteur transmet aux moyens informatiques du système objet de l'invention, un ordre d'appel des secours extérieurs, de sorte à réduire le temps d'intervention d'un personnel médical spécifique. Un autre bouton (244) virtuel permet de prévenir des forces de polices, et un autre bouton (245) virtuel permet de déclencher une procédure d'évacuation de la zone surveillée. Finalement, selon cet exemple de réalisation, le terminal (181) mobile du sauveteur comprend une zone d'affichage d'alertes spécifiques.

Selon le lieu d'utilisation du dispositif objet de l'invention, ces alertes spécifiques concernent des avis météo (orages, tempêtes), des alertes aux prédateurs (requins), des alertes à la pollution ou des alertes au raz de marée sans que cette liste ne soit limitative. L'affichage d'une telle alerte est avantageusement accompagné d'un signal sonore attirant l'attention du sauveteur. Les différentes fenêtres sont ici présentées sur le même écran mais, selon une variante de réalisation, les fenêtres sont présentées selon des écrans déroulants. Avantageusement le terminal (181) mobile comprend des écrans déroulants donnant des renseignements sur d'autres paramètres tels que le coefficient et l'heure de la marée, la température de l'eau et de l'air, la météo, l'annuaire téléphonique etc. qui permettent au sauveteur de renseigner facilement les usagers, le rendant plus disponible pour les tâches de surveillance.

Ainsi, selon un exemple de réalisation avantageux, le dispositif objet de l'invention combine plusieurs réseaux auxquels sont dévolus des tâches spécifiques :
- un réseau de surveillance fonctionnant à basse fréquence qui permet la détection des alarmes, le positionnement et l'identification des dispositifs portatifs. Ce réseau basse fréquence correspond aux tâches de sécurité primaires, il transmet peu d'informations, ce qui permet de miniaturiser les dispositifs et d'en réduire la puissance et d'y connecter un très grand nombre de dispositifs portatifs. La plage de fréquence utilisée est spécifique, elle est réservée auprès des autorités compétentes. La spécificité de la plage de fréquence et la faible quantité d'information qui transite, permettent de conserver ce réseau peu sensible aux perturbations extérieures, des plages de fréquences spécifiques différentes sont par exemple utilisées dans le cas de deux zones à surveiller proches l'une de l'autre ;
- un réseau de communication, utilisant une plage de fréquence plus commune, par exemple selon le protocole WIFI® et qui permet l'échange de nombreuses données sans interférer avec le réseau de surveillance à basse. Ce réseau est un réseau privé entre les utilisateurs du dispositif objet de l'invention, c'est-à-dire les sauveteurs, il est avantageusement crypté pour le préserver de toute interférence ou intrusion ;
- éventuellement l'utilisation du réseau GSM pour la communication vers l'extérieur entre par exemple les terminaux mobiles des sauveteurs et des ressources de secours.

Selon le mode de mise en oeuvre particulier du système objet de l'invention, le signal de détresse déclenché par l'usager conduit à l'émission d'une pré-alerte, comportant un échange minimum de données par le réseau de surveillance, laquelle pré-alerte est complétée par l'interprétation de ces données et des données complémentaires transmises au sauveteur, lequel sauveteur déclenche, ou non, l'alerte proprement dite en fonction de cet ensemble d'informations.

Avantageusement, lorsque la législation du pays dans lequel le système objet de l'invention est installé l'autorise, les codes d'identification individuels desdits dispositifs portatifs sont associés dans les moyens informatiques (140), par une table de correspondance, à des informations personnelles de l'usager qui le porte, tel que son nom, son âge, son appartenance à une famille ou un groupe, ou la nature de l'activité pratiquée.

Ainsi en cas d'égarement d'un membre d'un groupe ou d'une famille, la recherche du ou des dispositifs portatifs qui lui sont associés est facilitée, afin de permettre au membre égaré de rejoindre son groupe.

Selon un exemple de réalisation, le renseignement de la nature de l'activité pratiquée par l'usager permet de déterminer des intervalles de temps différents séparant l'envoi des trames par le dispositif portatif, cette caractéristique étant alors soit programmée dans ledit dispositif au moment de sa remise à l'usager, ou par l'utilisation de dispositifs portatifs, par exemple, de couleurs différentes, correspondant aux différentes configurations envisagées. Ainsi, lorsque la zone surveillée est une plage, les séquences d'échange des dispositifs portatifs portés des baigneurs sont réalisées toutes les minutes et les séquences d'échange du dispositif portatif porté par un surfeur ou un véliplanchiste sont réalisées toutes les 10 secondes. Il en est de même lorsque le dispositif objet de l'invention est utilisé pour surveiller une zone de montagne, où les séquences d'échanges sont plus rapprochées pour les skieurs que pour les randonneurs à raquettes. Cette différenciation des activités au niveau des dispositifs portatifs est avantageusement combinée à la capacité du système objet de l'invention de définir une zone à risque, en excluant la pratique de certaines activités dans lesdites zones. Ainsi, le système objet de l'invention permet d'avertir un baigneur lorsque celui-ci s'approche d'une zone dans laquelle la pratique de la planche à voile est autorisée, ou d'un chenal de navigation, et inversement de prévenir un véliplanchiste qu'il entre dans une zone réservée à la baignade. Ainsi, le système objet de l'invention permet d'automatiser des tâches de surveillance s'apparentant à des tâches de police, traditionnellement réalisées par les sauveteurs.

En revenant à la figure 1, selon un exemple de réalisation du dispositif objet de l'invention, l'accès à l'espace surveillé est réalisé au moyen d'un portique (135) qui détecte le port d'un dispositif portatif par l'usager (150) et le bon fonctionnement de ce dispositif portatif. Ainsi, en cas de mauvais fonctionnement dudit dispositif, ou si l'usager n'en porte pas, ou encore si le dispositif porté par l'usager ne correspond pas au domaine surveillé, notamment parce qu'il n'est pas accordé sur les bonnes fréquences d'émission-réception, l'usager est averti par un signal adapté et invité à se rendre au poste (130) de commandement sécurité. Avantageusement d'autres portiques de ce type sont installés sur l'espace surveillé.

Figure 6, selon un exemple de réalisation du procédé objet de l'invention première étape (610) de détection comprend la réception d'un signal de détresse dans une trame d'information reçue d'un dispositif portatif émettant sur le réseau de surveillance et se trouvant dans l'espace surveillé. Selon un exemple de réalisation cette détection est une suspicion de détresse. La trame reçue du dispositif portatif comporte les informations de géolocalisation dudit dispositif, sous la forme de coordonnées GPS, de sorte qu'au cours d'une étape de localisation (620) les moyens informatiques localisent ledit dispositif sur la cartographie du lieu. Une fois le dispositif portatif localisé, selon un exemple de réalisation, lesdits moyens informatiques procèdent d'une part à une étape (630) de pointage consistant à orienter la caméra sur son support mobile vers la zone d'intérêt correspondant à la localisation du dispositif portatif, et parallèlement, à une étape de diffusion (640) consistant à diffuser les informations recueillies sur le réseau de communication ou sur l'écran des moyens informatiques dans le cas d'un poste fixe. Selon un mode de réalisation particulier, lorsque le système objet de l'invention comprend cette fonction, les moyens informatiques font également l'acquisition (650) d'une série de données physiologiques de l'usager, et, au cours d'une étape (660) de traitement, interprètent lesdites données, notamment, mais non exclusivement, en les comparant à des standards. Le résultat de ce traitement, ainsi que les données brutes le cas échéant, est diffusé vers le terminal mobile ou l'écran des moyens informatiques au cours de l'étape (640) de diffusion. À partir de ces différentes informations, le sauveteur, au cours d'une étape (670) d'analyse, juge du degré d'urgence de la situation. Si la situation ne présente pas d'urgence, par exemple en cas de déclenchement intempestif d'un dispositif portatif, le sauveteur adresse (695) soit directement soit au moyen du réseau de communication, un ordre acquittement aux moyens informatiques qui clôturent l'alarme. Dans le cas où la situation revêt un caractère d'urgence, le sauveteur confirme (680) la pré-alerte. Avantageusement, lorsque la pré-alerte est confirmée le dispositif système objet de l'invention adresse (690) une requête à des secours extérieurs afin de réduire leur délai d'arrivée sur les lieux. Selon un mode de réalisation, au cours d'une étape d'assistance (681) le sauveteur, muni de son terminal portatif, se porte à la rencontre de l'usager en détresse. À l'arrivée sur les lieux, le sauveteur émet (682) sur le réseau de surveillance un diagnostic de l'état de la personne (consciente, inconsciente, en arrêt cardiorespiratoire) de sorte à assurer la disponibilité des moyens de secours adapté lors du retour de la victime sur la plage. Selon un autre mode de réalisation, le déplacement du sauveteur vers la victime est précédé ou combiné à une étape (685) d'envoi d'un vecteur équipé de moyen de secours, par exemple un drone portant une bouée largable, vers l'usager en détresse.

La description ci-avant et les exemples de réalisation montrent que l'invention atteint les objectifs visés, en particulier, le dispositif objet de l'invention permet d'assister les sauveteurs dans leur mission de surveillance sur un vaste domaine. Le dispositif objet de l'invention est insensible à la turbidité et à l'agitation de l'eau ou plus généralement du milieu dans lequel évoluent les usagers (150). Ainsi, le dispositif et le procédé objets de l'invention ne sont pas limités à la surveillance d'une zone de baignade mais sont adaptables à la surveillance de toute zone couvrant un espace d'activités à risque, par exemple une partie d'un domaine skiable, d'une zone de montagne ou d'activités nautiques. Le dispositif est aisé à installer et à démonter. Selon des modes de réalisation particuliers, et notamment pour la surveillance d'une zone réduite, par exemple un plan d'eau artificiel, le système de géolocalisation par satellite est avantageusement remplacé par un dispositif de localisation par triangulation, comprenant deux autres dispositifs émetteurs-récepteurs aptes à émettre et à recevoir dans la bande de fréquence du correspondant à celle du réseau de surveillance.

Ainsi, le dispositif objet de l'invention, sur la base des mêmes moyens est adaptable à différentes configurations de surveillance.

## Revendications

1. Procédé pour la surveillance d'un espace en plein air, dit espace surveillé, par un système comprenant :
a. un réseau informatique de surveillance comportant des moyens (110) d'émission-réception dans une bande de fréquences comprise 135 MHz et 175 MHz (135.10⁶ à 175.10⁶ Hertz) selon un mode bidirectionnel non simultané et dont la couverture géographique est égale ou supérieure à celle de l'espace surveillé ;
b. un dispositif portatif (351, 352, 450) comprenant une puce de positionnement par satellite et des moyens pour émettre et recevoir des informations sur le réseau informatique de surveillance ;
c. des moyens informatiques (140) connectés au réseau informatique de surveillance et comprenant dans des moyens de mémoire une cartographie géoréférencée de l'espace surveillé et un géorepérage virtuel d'une aire (515) de surveillance, dont la surface géographique est comprise dans la portée (510) géographique des moyens d'émission-réception du réseau informatique de surveillance, et des moyens d'affichage (181) permettant de visualiser l'espace surveillé ;
lequel procédé comprend les étapes consistant à :
i. délimiter par géorepérage virtuel une aire (515) de surveillance sur la cartographie géoréférencée ;
ii. émettre par le dispositif portatif sur le réseau de surveillance, à intervalles réguliers, une trame d'informations comprenant, un identifiant individuel dudit dispositif portatif, la position géolocalisée de ce dispositif portatif et l'état de détresse dudit dispositif portatif ;
iii. enregistrer dans les moyens de mémoire du système informatique la position géolocalisée dudit dispositif et l'horodatage de cette position.
iv. afficher sur les moyens d'affichage des moyens informatiques la positon du dispositif portatif dans la cartographie lorsque l'état de détresse transmis par le dispositif portatif correspond à une situation de danger ;
caractérisé ee ce qu'il comprend les étapes consistant à :
vi. enregistrer dans un fichier historique la géolocalisation des situations de détresse détectées ;
vii. délimiter par géorepérage virtuel, dans l'aire de surveillance, une aire (514), dite zone à risque, en fonction des enregistrements contenus dans le fichier historique

2. Procédé selon la revendication 1, comprenant les étapes consistant à :
viii. acquérir des informations sur la topographie de l'espace surveillé et les forces d'entraînement des usagers présent dans cet espace ;
ix. déduire des informations acquises à l'étape viii) et des informations obtenues à l'étape iii) la une zone de localisation probable du dispositif portatif dans l'espace surveillé ;
x. afficher la zone déterminée à l'étape ix).

3. Procédé selon la revendication 1, comprenant une étape consistant à :
v. déterminer selon une fréquence d'évaluation, le nombre de dispositifs portatifs se trouvant dans l'aire de surveillance.

4. Procédé selon la revendication 1, dans lequel le système comprend :
d. une caméra (170) liée à un support orientable, pilotés par les moyens informatiques (140), apte à scruter la surface de l'espace surveillé et à envoyer les images obtenues vers lesdits moyens informatiques.

5. Procédé selon la revendication 4 dans lequel le système comprend :
e. un réseau informatique sans fil, dit réseau de communication, connecté aux moyens informatiques ;
f. un terminal numérique mobile (181), dit tablette, comprenant un écran vidéo et connecté au réseau de communication, apte à recevoir par ledit réseau de communication une image émise par les moyens informatiques.

6. Procédé selon la revendication 1, dans lequel le dispositif portatif (351, 352, 450) du système comporte des moyens pour émettre sur le réseau de surveillance une information relative à la gravité d'une situation de détresse.

7. Procédé selon la revendication 6, dans lequel le dispositif portatif (352) du système est porté par un usager de l'espace surveillé ledit dispositif portatif comporte :
bi. un capteur apte à mesurer un paramètre physiologique de l'usager;
bii. des moyens pour comparer, avec un seuil déterminé, le niveau dudit paramètre physiologique ;
biii. des moyens pour émettre su le réseau de surveillance un signal lorsque ledit seuil déterminé est franchi.

8. Procédé selon la revendication 6, dans lequel le dispositif portatif (450) du système est porté par un sauveteur surveillant l'espace surveillé et le dit dispositif portatif comporte :
biv. des moyens (451, 452, 453) pour émettre une information relative à la gravité de la situation de détresse ;
bv. des moyens (460) pour informer le porteur du dispositif de la bonne transmission des signaux sur le réseau de surveillance.

9. Procédé selon la revendication 1, dans lequel le dispositif portatif comporte :
bvi. des moyens pour informer son porteur lorsqu'il sort de l'aire (515) de surveillance.

10. Procédé selon la revendication 1, dans lequel le système comporte :
g. un vecteur (172), comportant des moyens de géolocalisation, apte à se déplacer dans l'espace surveillé ledit vecteur comportant des moyens pour transporter de équipements de secours.

11. Procédé selon la revendication 10, dans lequel le vecteur du système comporte une caméra vidéo apte à communiquer avec les moyens informatiques.

12. Utilisation du procédé selon l'une quelconque des revendications 1 à 11 pour la surveillance d'une zone de baignade.

13. Utilisation du procédé selon l'une quelconque des revendications 1 à 11 pour la surveillance d'un domaine skiable.

## Patentansprüche

1. Verfahren zur Überwachung eines Raums unter freiem Himmel, überwachter Raum genannt, durch ein System, das enthält:
a. ein Überwachungs-Computernetzwerk, das Sende-/Empfangseinrichtungen (110) in einem Frequenzband zwischen 135 MHz und 175 MHz (135.10⁶ bis 175.10⁶ Hertz) gemäß einem nicht simultanen bidirektionalen Modus enthält und dessen geographische Abdeckung gleich derjenigen oder größer als diejenige des überwachten Raums ist;
b. eine tragbare Vorrichtung (351, 352, 450), die einen Chip zur satellitengestützten Positionierung und Einrichtungen enthält, um Informationen auf dem Überwachungs-Computernetzwerk zu senden und zu empfangen;
c. EDV-Einrichtungen (140), die mit dem Überwachungs-Computernetzwerk verbunden sind und in Speichereinrichtungen eine raumbezogene Kartographie des überwachten Raums und ein virtuelles Geofencing eines Überwachungsbereichs (515) enthalten, dessen geographische Fläche in der geographischen Reichweite (510) der Sende-/Empfangseinrichtungen des Überwachungs-Computernetzwerks enthalten ist, und Anzeigeeinrichtungen (181), die es ermöglichen, den überwachten Raum anzuzeigen;
wobei das Verfahren die Schritte enthält, die darin bestehen:
i. durch virtuelles Geofencing einen Überwachungsbereich (515) auf der raumbezogenen Kartographie zu begrenzen;
ii. durch die tragbare Vorrichtung auf dem Überwachungsnetz in regelmäßigen Abständen eine Informationsfolge zu senden, die eine individuelle Kennung der tragbaren Vorrichtung, die geolokalisierte Position dieser tragbaren Vorrichtung und den Notfallzustand der tragbare Vorrichtung enthält;
iii. in den Speichereinrichtungen des Computersystems die geolokalisierte Position der Vorrichtung und die Datums- und Uhrzeitangabe dieser Position zu speichern,
iv. auf den Anzeigeeinrichtungen der EDV-Einrichtungen die Position der tragbaren Vorrichtung in der Kartographie anzuzeigen, wenn der von der tragbaren Vorrichtung übertragene Notfallzustand einer Gefahrensituation entspricht;
**dadurch gekennzeichnet, dass** es die Schritte enthält, die darin bestehen:
vi. in einer Protokolldatei die Geolokalisierung der erfassten Notfallsituationen zu speichern;
vii. durch virtuelles Geofencing im Überwachungsbereich einen Bereich (514), Risikozone genannt, abhängig von den in der Protokolldatei enthaltenen Aufzeichnungen zu begrenzen.

2. Verfahren nach Anspruch 1, das die Schritte enthält, die darin bestehen:
viii.Informationen über die Topographie des überwachten Raums und die Antriebskräfte der in diesem Raum anwesenden Benutzer zu erfassen;
ix. aus den im Schritt viii) erfassten Informationen und den im Schritt iii) erhaltenen Informationen eine wahrscheinliche Lokalisierungszone der tragbaren Vorrichtung im überwachten Raum abzuleiten;
x. die im Schritt ix) bestimmte Zone anzuzeigen.

3. Verfahren nach Anspruch 1, das einen Schritt enthält, der darin besteht:
v. gemäß einer Bewertungsfrequenz die Anzahl von tragbaren Vorrichtungen zu bestimmen, die sich im Überwachungsbereich befinden.

4. Verfahren nach Anspruch 1, wobei das System enthält:
d. eine Kamera (170) verbunden mit einem ausrichtbaren Träger, gesteuert von den EDV-Einrichtungen (140), in der Lage, die Fläche des überwachten Raums zu erforschen und die erhaltenen Bilder an die EDV-Einrichtungen zu senden.

5. Verfahren nach Anspruch 4 wobei das System enthält:
e. ein drahtloses Computernetzwerk, Kommunikationsnetzwerk genannt, verbunden mit den EDV-Einrichtungen;
f. ein mobiles digitales Endgerät (181), Tablet-PC genannt, das einen Videobildschirm enthält und mit dem Kommunikationsnetzwerk verbunden ist, in der Lage, vom Kommunikationsnetzwerk ein von den EDV-Einrichtungen gesendetes Bild zu empfangen.

6. Verfahren nach Anspruch 1, wobei die tragbare Vorrichtung (351, 352, 450) des Systems Einrichtungen aufweist, um auf dem Überwachungsnetz eine Information bezüglich der Schwere einer Notsituation zu senden.

7. Verfahren nach Anspruch 6, wobei die tragbare Vorrichtung (352) des Systems von einem Benutzer des überwachten Raums getragen wird, wobei die tragbare Vorrichtung aufweist:
bi. einen Sensor, der in der Lage ist, einen physiologischen Parameter des Benutzers zu messen;
bii. Einrichtungen, um den Pegel des physiologischen Parameters mit einer bestimmten Schwelle zu vergleichen;
biii. Einrichtungen, um auf dem Überwachungsnetz ein Signal zu senden, wenn die bestimmte Schwelle überschritten wird.

8. Verfahren nach Anspruch 6, wobei die tragbare Vorrichtung (450) des Systems von einem Retter getragen wird, der den überwachten Raum überwacht, und die tragbare Vorrichtung aufweist:
biv. Einrichtungen (451, 452, 453), um eine Information bezüglich der Schwere der Notsituation zu senden;
bv. Einrichtungen (460), um den Träger der Vorrichtung über die gute Übertragung der Signale auf dem Überwachungsnetz zu informieren.

9. Verfahren nach Anspruch 1, wobei die tragbare Vorrichtung aufweist:
bvi. Einrichtungen, um ihren Träger zu informieren, wenn er den Überwachungsbereich (515) verlässt.

10. Verfahren nach Anspruch 1, wobei das System aufweist:
g. einen Geolokalisierungseinrichtungen aufweisenden Träger (172), der fähig ist, sich im überwachten Raum zu bewegen, wobei der Träger Einrichtungen aufweist, um Hilfsausrüstungen zu transportieren.

11. Verfahren nach Anspruch 10, wobei der Träger des Systems eine Videokamera aufweist, die mit den EDV-Einrichtungen kommunizieren kann.

12. Verwendung des Verfahrens nach einem der Ansprüche 1 bis 11 zur Überwachung einer Badezone.

13. Verwendung des Verfahrens nach einem der Ansprüche 1 bis 11 zur Überwachung eines Skigebiets.

## Claims

1. Method for monitoring an outdoor space, termed monitored space, using a system comprising:
a. a monitoring computer network comprising means (110) for sending/receiving in a frequency band between 135 MHz and 175 MHz (135.10⁶ to 175.10⁶ Hertz) in a non-simultaneous bidirectional mode and the geographical coverage of which is equal to or greater than that of the monitored space;
b. a portable device (351, 352, 450) comprising a satellite positioning chip and means for sending and receiving information on the monitoring computer network;
c. computer means (140) connected to the monitoring computer network and comprising, in memory means, a georeferenced map of the monitored space and a virtual geofencing of a monitoring area (515), the geographical area of which is contained within the geographical range (510) of the sending/receiving means of the monitoring computer network, and display means (181) enabling the monitored space to be viewed;
said method comprises the steps consisting in:
i. using virtual geofencing to delineate a monitoring area (515) on the georeferenced map;
ii. using the portable device to send, on the monitoring network, at regular intervals, a frame of information comprising an individual identifier of said portable device, the geolocated position of this portable device and the distress state of said portable device;
iii. recording the geolocated position of said device and the timestamp of this position in the memory means of the computer system;
iv. displaying, on the display means of the computer means, the position of the portable device on the map when the distress state transmitted by the portable device corresponds to a dangerous situation;
**characterized in that** it comprises the steps consisting in:
vi. storing, in a history file, the geolocation of the detected distress situations;
vii. using virtual geofencing to delineate, in the monitoring area, an area (514), termed risk zone, depending on the records contained in the history file.

2. The method according to Claim 1, comprising the steps consisting in:
viii. acquiring information regarding the topography of the monitored space and the drifting forces acting on the users present in this space;
ix. deducing, from the information acquired in step viii) and from the information obtained in step iii), the probable zone in which the portable device is located in the monitored space;
x. displaying the zone determined in step ix).

3. Th method according to Claim 1, comprising a step consisting in:
v. determining, at a frequency of evaluation, the number of portable devices located in the monitoring area.

4. The method according to Claim 1, wherein the system comprises:
d. a camera (170) linked to an adjustable support that are both controlled by the computer means (140), the camera being able to scan the area of the monitored space and to send the images that are obtained to said computer means.

5. The method according to Claim 4, wherein the system comprises:
e. a wireless computer network, termed communication network, connected to the computer means;
f. a digital mobile terminal (181), called a tablet, comprising a video screen and connected to the communication network and able to receive, via said communication network, an image sent by the computer means.

6. The method according to Claim 1, wherein the portable device (351, 352, 450) of the system comprises means for sending, on the monitoring network, an information relating to the severity of a distress situation.

7. The method according to Claim 6, wherein the portable device (352) of the system is carried by a user in the monitored space and said portable device comprises:
bi. a sensor able to measure a physiological parameter of the user;
bii. means for comparing the level of said physiological parameter with a determined threshold;
biii. means for sending a signal on the monitoring network when said determined threshold is crossed.

8. The method according to Claim 6, wherein the portable device (450) of the system is carried by a lifeguard monitoring the monitored space, and said portable device comprises:
biv. means (451, 452, 453) for sending an information relating to the severity of the distress situation;
bv. means (460) for informing the carrier of the device of the successful transmission of the signals on the monitoring network.

9. The method according to Claim 1, wherein the portable device comprises:
bvi. means for informing its carrier that he is leaving the monitoring area (515).

10. The method according to Claim 1, wherein the system includes:
g. a carrier (172) comprising geolocation means and that is able to move in the monitored space, said carrier comprising means for transporting rescue equipment.

11. The method according to Claim 10, wherein the carrier of the system comprises a video camera able to communicate with the computer means.

12. Use of the method according to any one of Claims 1 to 11 for monitoring a bathing area.

13. Use of the method according to any one of Claims 1 to 11 for monitoring a skiing area.
